# EUROPEAN PATENT SPECIFICATION

(11) **EP 4 246 684 B1**
(45) Date of publication and mention of the grant of the patent: **26.08.2026**
(21) Application number: 21896879.0
(22) Date of filing: 18.11.2021
(51) Int. Cl.: H01M 50/209, H01M 10/04, H01M 50/105, H01M 50/186

(54) **BATTERY MODULE, BATTERY AND ASSEMBLY METHOD FOR BATTERY MODULE**
BATTERIEMODUL, BATTERIE UND MONTAGEVERFAHREN FÜR DAS BATTERIEMODUL
MODULE DE BATTERIE, BATTERIE ET PROCÉDÉ D'ASSEMBLAGE POUR MODULE DE BATTERIE

(30) Priority: 26.11.2020 CN 202011356339
(43) Date of publication of application: 20.09.2023
(73) Proprietor: BYD Company Limited, Shenzhen, Guangdong 518118 (CN)
(72) Inventor: HU, Shichao, Shenzhen, Guangdong 518118 (CN); JIANG, Yimiao, Shenzhen, Guangdong 518118 (CN)
(74) Representative: Dehns Germany Partnerschaft mbB
(86) International application number: PCT/CN2021/131553
(87) International publication number: WO 2022/111378

(56) References cited:
- CN-A- 106 207 076
- CN-A- 109 119 553
- CN-A- 111 435 716
- CN-U- 205 177 964
- CN-U- 207 009 592
- CN-U- 209 016 158
- CN-U- 209 447 881
- CN-U- 211 828 925

## Description

### FIELD

The present invention relates to the technical field of batteries, and more particularly, to a battery module, a battery, and an assembly method for a battery module.

### BACKGROUND

In the related art, in the assembly process of the existing battery module, the electrode core assembly is usually fixed in the housing by using glue, the bottom of the housing may be filled with glue, and the electrode core assembly is fixed in the housing by glue. Since the housing length of the existing battery module is relatively long, and after the electrode core assembly is assembled into the housing, an interval between any two adjacent electrode core assemblies or between an electrode core assembly and the housing is relatively small, and glue is difficult to pour. Even if the glue can be poured, the glue is unevenly filled on the bottom of the aluminum housing, which may cause the electrode core assembly to loosen in the housing during the use of the battery module, resulting in a poor contact between the electrode and the electrode core assembly of the battery module.

For example, document CN 209447881 U relates to a battery module, which comprises more than two battery cells and a module enclosure frame, the module enclosure frame is used for fixing the battery cells, the module enclosure frame comprises two end plates and two side plates, and the two end plates are respectively and fixedly connected with the two side plates through welding; wherein the insulating layer is arranged on the side plate, a glue accommodating groove is formed in the insulating layer, the glue accommodating groove is arranged corresponding to the side surface of the battery monomer, and a glue accommodating cavity is formed among the glue accommodating groove, the side surface of the battery monomer and the side plate.

### SUMMARY

The present invention relates to a battery module, to a battery and to an assembly method for a battery module with the features of the independent claims. The present invention resolves at least one of the technical problems in the related art. The present invention provides a battery module, and the operating stability of the battery module can be improved by configuring a glue container in the battery module.

The present invention further provides a battery.

The present invention further provides an assembly method for a battery module.

The battery module according to the present invention includes: a housing, including a mounting space; at least one electrode core assembly, disposed in the mounting space; and a glue container, connected with the at least one electrode core assembly and located in the mounting space, where the glue container comprises a groove with an open end, and the open end of the groove is spaced apart from a top surface or a bottom surface of the housing.

According to the battery module of the present invention, the glue storage structure is arranged in the battery module, glue is injected into the housing through the glue storage structure during the assembly of the battery module, and the glue in the glue storage structure can evenly fill the bottom of the mounting space, so that the electrode core assembly can be firmly bonded and fixed in the housing, thereby improving the operating stability of the battery module. Moreover, through the glue storage structure, a position in the housing that does not require glue can be kept clean and tidy, so that the heat dissipation capacity of the battery module can be improved, and the service life of the battery can be further prolonged.

In some embodiments of the present invention, multiple electrode core assemblies are configured. The multiple electrode core assemblies are disposed in a length direction of the electrode core assemblies, and the glue container is disposed between at least two adjacent electrode core assemblies of the multiple electrode core assemblies and/or between each of the electrode core assemblies and the housing.

In some embodiments of the present invention, the glue container extends in a height direction of the electrode core assemblies.

In some embodiments of the present invention, a glue flow channel is disposed on an outer surface of the glue container, and the glue flow channel is configured to store glue to glue the glue container to the at least one electrode core assembly.

In some embodiments of the present invention, the glue flow channel is disposed on at least one of two surfaces of the outer surface in a width direction of the battery module.

In some embodiments of the present invention, the glue container has a glue storage capacity Q, and Q = L*A*B, where L is a length of the mounting space in a length direction of the battery module, A is a width of the mounting space in the width direction of the battery module, and B is a distance between the electrode core assembly and the housing in a height direction of the battery module.

In some embodiments of the present invention, N glue containers are disposed int the housing, the glue storage capacity of each of the N glue containers is Q₁, and Q₁ = (L*A*B)/N, where L is a length of the mounting space in a length direction of the battery module, A is a width of the mounting space in the width direction of the battery module, and B is a distance between the electrode core assembly and the housing in a height direction of the battery module.

In some embodiments of the present invention, 0.5 mm ≤ B ≤ 5 mm.

In some embodiments of the present invention, 1 mm ≤ B ≤ 3 mm.

In some embodiments of the present invention, the electrode core assembly includes at least one electrode core.

In some embodiments of the present invention, the at least one electrode core is disposed in the width direction of the battery module; and side surfaces of two adjacent electrode cores of the at least one electrode core abut against each other in a thickness direction of the at least one electrode core.

In some embodiments of the present invention, each of the electrode core assemblies comprises a same number of electrode cores, and each of the electrode core assemblies has a same thickness.

In some embodiments of the present invention, the glue container has a shape of a cuboid or a cylinder.

In some embodiments of the present invention, multiple glue containers are configured. The glue containers are spaced apart in the length direction of the electrode core assemblies. At least one of the glue containers is disposed between two adjacent electrode core assemblies of the electrode core assemblies, and/or between the electrode core assemblies and the housing.

The battery according to the present invention includes the above battery module.

According to the assembly method for a battery module of the present invention, the battery module includes a housing, a glue container, and at least one electrode core assembly. The housing includes a mounting space. The glue container includes a glue storage groove with an open end. The assembly method includes the following steps: connecting the glue container to the electrode core assembly with the open end of the groove upward; injecting glue into the glue storage groove of the glue container; disposing the glue container and the electrode core assembly into the mounting space as one piece, and sealing the housing, so that the open end of the groove is spaced apart from a top surface the housing; and clamping the housing and rotating the battery module by 180 degrees.

According to the assembly method for a battery module of the present invention, the battery module is assembled by using the assembly method. Glue is injected into the housing through the glue storage structure, and the glue in the glue storage structure can evenly fill the bottom of the mounting space, so that the electrode core assembly can be firmly bonded and fixed in the housing, thereby improving the operating stability of the battery module. Moreover, according to the assembly method, the position in the housing that does not require glue can be kept clean and tidy, so that the heat dissipation capacity of the battery module can be improved, and the service life of the battery can be further prolonged.

Some of the additional aspects and advantages of the present invention are to be given in the following description, and become apparent in the following description or understood through the practice of the present invention.

### BRIEF DESCRIPTION OF THE DRAWINGS

FIG. 1 is a schematic diagram of a battery module according to an embodiment of the present invention.
FIG. 2 is a schematic diagram of connection between an electrode core assembly of a battery module and a glue container according to an embodiment of the present invention.
FIG. 3 is a schematic diagram of connection between an electrode core assembly of a battery module and a glue container according to an embodiment of the present invention from another perspective.
FIG. 4 is a schematic diagram of a glue container of a battery module according to an embodiment of the present invention.
FIG. 5 is a front view of multiple electrode core assemblies connected in series according to an embodiment of the present invention.
FIG. 6 is a top view of multiple electrode core assemblies connected in series according to an embodiment of the present invention.
FIG. 7 is a flowchart of an assembly method according to an embodiment of the present invention.

### DETAILED DESCRIPTION

Embodiments of the present invention are described in detail below, and examples of the embodiments are shown in the accompanying drawings, where the same or similar elements or elements having the same or similar functions are represented by the same or similar reference numerals throughout the description. The embodiments described below with reference to the accompanying drawings are merely examples and used for explaining the present invention, and do not limit the present invention, which is defined by the claims.

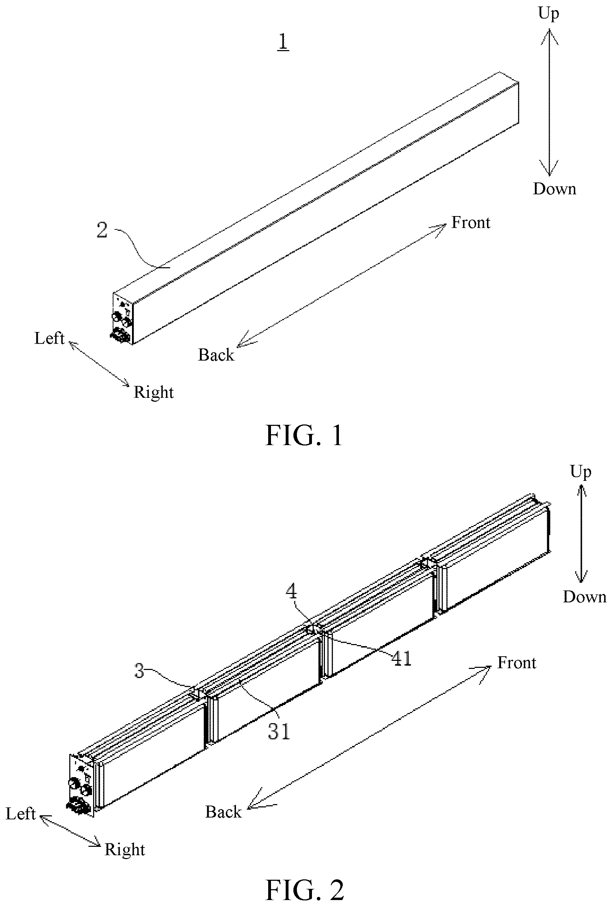

A battery module 1 according to the embodiments of the present invention is described below with reference to FIG. 1 to FIG. 6. The battery module 1 is arranged/disposed in a battery.

As shown in FIG. 1 to FIG. 6, the battery module 1 according to an embodiment of the present invention includes a housing 2, a glue container 4, and at least one electrode core assembly 3. The housing 2 defines/includes a mounting space. The electrode core assembly 3 is arranged/disposed in the mounting space. The glue container 4 is connected with the electrode core assembly 3 and located in the mounting space. The glue container 4 defines/includes a glue storage groove 41 with an open end. The open end of the glue storage groove 41 is spaced apart from a top wall or a bottom wall of the housing 2.

In the process of assembling the battery module 1, the glue container 4 is first connected with the electrode core assembly 3, and the open end of the glue container 4 is placed upward in FIG. 2. Then, glue is injected into the glue container 4, and the glue container 4 and the electrode core assembly 3 are placed into the mounting space as one piece. After the housing 2 is packaged or sealed, the battery module 1 is clamped and rotated by 180 degrees in a length direction of the housing 2. In this case, in the mounting space, the open end of the glue container 4 faces downward in FIG. 1. Since the open end of the glue storage groove 41 is spaced apart from the top wall or the bottom wall of the housing 2, the glue in the glue container 4 flows out from the glue storage groove 41 under the action of gravity, and the glue evenly fills a gap between the electrode core assembly 3 and the top wall of the housing 2 or between the electrode core assembly 3 and the bottom wall of the housing 2. The liquid level of the glue is flat and even, and a contact area between the electrode core assembly 3 and the glue is large, so that the electrode core assembly 3 can be firmly bonded in the housing 2, and the electrode core assembly 3 will not loosen in the housing 2, thereby improving the operating stability of the battery module 1. In addition, in the process of turning over the battery module 1, the glue will not drip into a gap between the electrode core assembly 3 and a side wall of the housing 2, and when the electrode core assembly 3 expands during the use of the battery module 1, the glue does not affect the heat transfer between the electrode core assembly 3 and the housing 2, so as to ensure the heat dissipation performance of the battery module 1, thereby prolonging the service life of the battery module 1. It should be noted that, when the open end of the glue storage groove 41 is spaced apart from the top wall of the housing 2, the glue in the glue container 4 flows out from the glue storage groove 41, and the glue evenly fills the gap between the electrode core assembly 3 and the top wall of the housing 2. When the open end of the glue storage groove 41 is spaced apart from the bottom wall of the housing 2, the glue in the glue container 4 flows out from the glue storage groove 41, and the glue evenly fills the gap between the electrode core assembly 3 and the bottom wall of the housing 2.

In this way, the glue container 4 is arranged/disposed in the battery module 1, glue is injected into the housing through the glue container during the assembly of the battery module 1, and the glue in the glue container 4 can evenly fill a position between the electrode core assembly 3 and the housing 2 that requires glue, so that the electrode core assembly 3 can be firmly bonded and fixed in the housing 2, thereby improving the operating stability of the battery module 1. Moreover, through the glue container 4, a position in the housing 2 that does not require glue can be kept clean and tidy, so that the heat dissipation capacity of the battery module 1 can be improved, and the service life of the battery can be further prolonged.

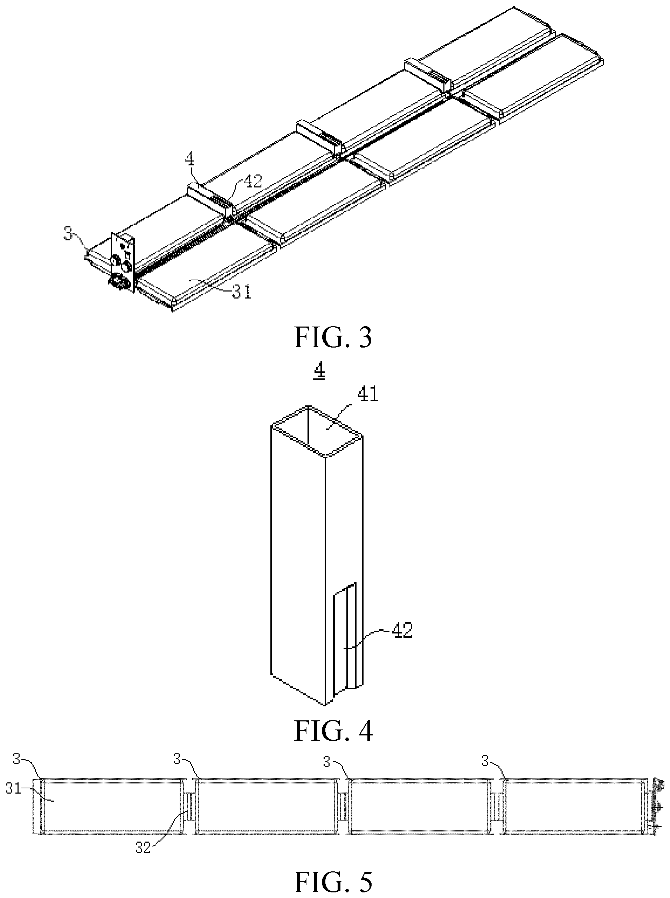

In some embodiments of the present invention, as shown in FIG. 2 and FIG. 3, multiple electrode core assemblies 3 may be configured. The multiple electrode core assemblies 3 are arranged/disposed in sequence in a length direction of the electrode core assemblies 3. The glue container 4 may be arranged/disposed between at least two adjacent electrode core assemblies 3 of the multiple electrode core assemblies 3 and/or between the electrode core assemblies 3 and the housing 2. In the case that the glue container 4 is arranged between at least two adjacent electrode core assemblies 3 of the multiple electrode core assemblies 3, when the glue container 4 injects glue into the housing 2, the glue injected into the housing 2 by the glue container 4 may diffuse in the housing 2, so that the glue is distributed between the two adjacent glue containers 4 in the length direction of the housing 2, which can ensure that the position between each of the electrode core assemblies 3 and the housing 2 that needs glue is filled with glue evenly. In addition, this configuration can also appropriately reduce the number of glue containers 4, thereby reducing the production cost of the battery module 1 and increasing the energy density of the battery module 1. It should be noted that, the glue container 4 being arranged between the electrode core assembly 3 and the housing 2 means that the glue container 4 may be arranged between an inner surface of each of two side walls of the housing 2 spaced apart in the length direction of the battery module 1 and the electrode core assembly 3. The length direction of the battery module 1 is a front-back direction in FIG. 1, and the inner surface of the housing 2 is a surface of the housing 2 facing the mounting space. This configuration can ensure that the electrode core assembly 3 is tightly attached to the housing 2.

Further, multiple glue containers 4 may be arranged/disposed. The multiple glue containers 4 may be spaced apart in sequence in the length direction of the electrode core assemblies 3. The glue container 4 may be arranged between any two adjacent electrode core assemblies 3 and/or between the electrode core assembly 3 and the housing 2. In an embodiment, the glue container 4 may be arranged both between any two adjacent electrode core assemblies 3 and between the electrode core assembly 3 and the housing 2. By configuring the glue containers 4 between any two adjacent electrode core assemblies 3 and between the electrode core assembly 3 and the housing 2, the glue containers 4 in the housing 2 may be denser, and the uniformity of glue in the housing 2 can be further improved, so that the electrode core assembly 3 can be bonded to the housing 2 more reliably.

In some embodiments of the present invention, as shown in FIG. 2, the glue container 4 extends in a height direction (e.g., an up and down direction) of the electrode core assembly 3. It should be noted that, the glue container 4 may be configured in a square column shape (e.g., a cuboid), but the present invention is not limited thereto. The glue container 4 may also be configured in other shapes. For example, the glue container 4 may also be configured in a cylinder shape. A glue storage groove 41 may be arranged/disposed in the glue container 4, an end of the glue storage groove 41 is open, and a side wall and a bottom wall of the glue storage groove 41 are sealed. The height direction of the electrode core assembly 3 is an up-down direction shown in FIG. 2. This configuration can reduce the space occupied by the glue container 4 between any two adjacent electrode core assemblies 3 or between the electrode core assembly 3 and the housing 2, thereby increasing the volume of the electrode core assembly 3 and further improving the storage capacity of the battery module 1. Moreover, the glue container 4 extending in the height direction of the electrode core assembly 3 can increase the volume of the glue storage groove 41, thereby increasing the glue storage capacity of the glue storage groove 41.

In addition, in the related art, glue is injected into the opening at the end of the housing. When the length of the housing is relatively large, with the increase of the amount of glue injected into the housing, the glue injection pressure required for injecting glue into the housing increases, which may cause the glue to flow through the gap between the housing and the electrode core assembly and between the electrode core assemblies to the position in the electrode core assembly that does not require glue. In the embodiment of the present invention, the glue container 4 extends in the height direction of the electrode core assembly 3, so that in the process of turning over the battery module 1 after the glue container 4 and the electrode core assembly 3 are placed into the housing 2, the glue in the glue storage groove 41 is not easy to spill, and the position in the housing 2 that does not require glue can be kept clean and tidy, thereby improving the heat dissipation capacity of the battery module 1 and further prolonging the service life of the battery.

In some embodiments of the present invention, as shown in FIG. 3 and FIG. 4, an outer surface of the glue container 4 may be provided with a glue flow channel 42. The glue flow channel 42 is configured to store glue to connect the glue container 4 to the electrode core assembly 3. In the process of connecting the glue container 4 with the electrode core assembly 3, the electrode core assembly 3 and the glue container 4 are placed into a low-pressure injection mold, and injection molding glue is injected into the glue flow channel 42 by the low-pressure injection molding. The injection molding glue may fill the glue flow channel 42, and the injection molding glue bonds the glue container 4 and the electrode core assembly 3 together at an end of the glue flow channel 42 that is open on the side wall of the glue container 4, so that the glue container 4 can be firmly connected to the electrode core assembly 3.

In some embodiments of the present invention, as shown in FIG. 2 and FIG. 3, in a width direction of the battery module 1, the glue container 4 has a first surface and a second surface opposite to each other. The first surface and/or the second surface may be provided with the glue flow channel 42. It should be noted that, the width direction of the battery module 1 is the left-right direction in FIG. 1. The first surface and the second surface of the glue container 4 may be each provided with the glue flow channel 42. Through this configuration, the glue container 4 can be more firmly connected with the electrode core assembly 3, and the glue container 4 not only can pour glue into the mounting space, but also can support the electrode core assembly 3 in the length direction of the battery module 1. In an embodiment, in the length direction of the battery module 1, a tab is connected between two adjacent electrode core assemblies 3, and in the width direction of the battery module 1, a gap is formed after two adjacent tabs are spaced apart from each other. The glue container 4 may be arranged/disposed in the gap, and the glue container 4 may fill the gap. It should be noted that, the length direction of the battery module 1 is the front-back direction in FIG. 1. The tab of the electrode core assembly 3 is made of a soft material and connected with the electrode core assembly 3 through the glue container 4. The glue container 4 can provide support for the tab, thereby improving the operating stability of the battery module 1. The first surface or the second surface of the glue container 4 may be provided with the glue flow channel 42, so that the processes of the glue container 4 can be reduced.

In some embodiments of the present invention, as shown in FIG. 2, a length of the mounting space in a length direction of the battery module 1 is L, a width of the mounting space in the width direction of the battery module 1 is A, a distance between the electrode core assembly 3 and the housing 2 in a height direction of the battery module 1 is B, a total glue storage capacity of the glue container 4 is Q, and Q = L*A*B. In the process of assembling the battery module 1, the electrode core assembly 3 and the glue container 4 are connected and placed into the housing 2. In this case, the distance between the electrode core assembly 3 and the housing 2 is a distance between an upper end surface of the electrode core assembly 3 and an upper inner surface of the housing 2. It should be noted that, when the electrode core assembly 3 and the glue container 4 are connected and placed into the housing 2, the electrode core assembly 3 abuts against a lower surface in the housing 2. After the glue container 4 and the electrode core assembly 3 are placed into the housing 2, by being clamped between the two side walls in the width direction of the battery module 1, the electrode core assembly 3 can be prevented from moving in the housing 2. Moreover, a gap is formed between the electrode core assembly 3 and the housing 2 in the height direction of the battery module 1 to ensure that the glue flows out from the glue container 4 under the action of gravity. Therefore, the glue stored in all of the glue containers 4 in the housing 2 should completely fill the gap between the electrode core assembly 3 and the housing 2 in the height direction of the battery module 1, so that the upper end surface of the electrode core assembly 3 is connected with the upper inner surface of the housing 2 through the glue, and the position of the electrode core assembly 3 relative to the housing 2 in the mounting space is fixed, thereby improving the operating stability of the battery module 1. In addition, the capacity of the glue can be appropriately configured according to Q=L*A*B, so as to ensure that the position between the electrode core assembly 3 and the housing 2 that requires glue is evenly filled with the glue, thereby preventing the electrode core assembly 3 from loosening.

In some embodiments of the present invention, as shown in FIG. 2 and FIG. 3, the glue containers 4 are evenly arranged/disposed in the housing 2. N glue containers 4 are arranged, and the glue storage capacity of each of the glue containers 4 is Q1, and Q1 = (L*A*B)/N. It may also be understood that the amount of the glue stored in the glue storage groove 41 of each glue container 4 is the same. Under the action of gravity, the glue in the glue storage grooves 41 may evenly fill in the gap between the electrode core assembly 3 and the housing 2 in the height direction of the battery module 1. This configuration can level the liquid level of the glue flowing into the mounting space, so that the contact area between the glue and the upper end surface of the electrode core assembly 3 can be increased, and the glue can firmly bond and fix the electrode core assembly 3 in the housing 2.

In some embodiments of the present invention, 0.5 mm ≤ B ≤ 5 mm. In an embodiment in the height direction of the battery module 1, a distance B between the electrode core assembly 3 and the housing 2 may be set to 1 mm to 3 mm, so that the amount of the glue stored in the glue container 4 and the size of the housing 2 can be both reduced, thereby increasing the energy density of the battery module 1 and reducing the production cost of the battery module 1.

In some embodiments of the present invention, as shown in FIG. 2 and FIG. 3, the electrode core assembly 3 includes at least one electrode core 31, and the width direction of the battery module 1 is the same as the thickness direction of the electrode core 31. The width direction of the battery module 1 and the thickness direction of the electrode core 31 represent the left-right direction in FIG. 1 and FIG. 2. Further, the at least one electrode core 31 is arranged/disposed in sequence in the width direction of the battery module 1 to form the electrode core assembly 3, and opposite side walls of any two adjacent electrode cores 31 abut against each other in a thickness direction of the electrode core 31. By combining the multiple electrode cores 31 to form the electrode core assembly 3, the width of the battery module 1 can be adjusted by changing the number of the electrode cores 31 in each electrode core assembly 3, which is beneficial to the universal design of the battery module 1 and can reduce the design cost of the battery module 1.

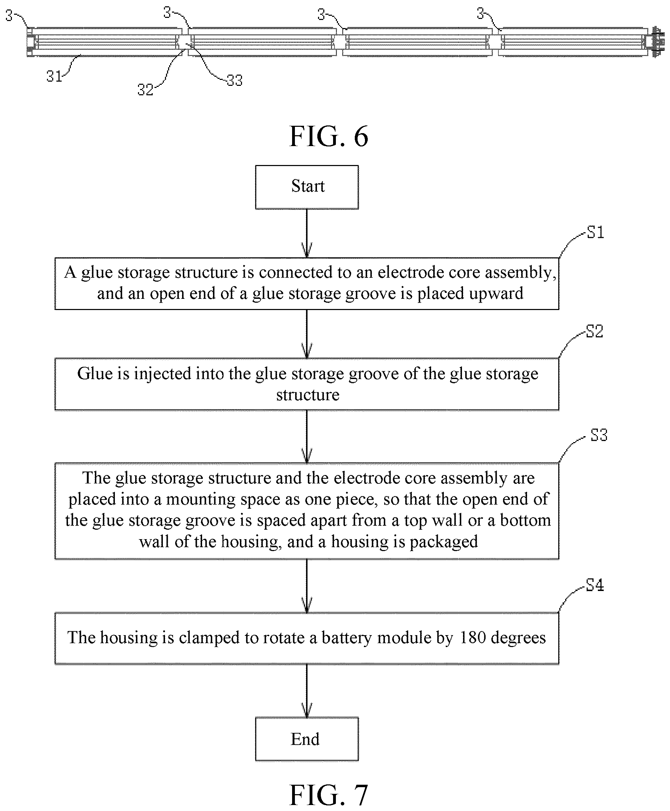

Further, multiple electrode core assemblies 3 are arranged/disposed in sequence in the length direction of the battery module 1, and each of the electrode core assemblies 3 may be provided with the same number of electrode cores 31 with the same thickness. When the multiple electrode core assemblies 3 are connected in series, the widths of the electrode core assemblies 3 connected in series can be uniform. In the length direction of the battery module 1, as shown in FIG. 5 and FIG. 6, a series-connected welding portion 32 is formed between any two adjacent electrode cores 31, and a mounting cavity 33 is defined between any two adjacent series-connected welding portions 32 and the electrode cores 31 in the width direction of the battery module 1. The glue container 4 may be arranged/disposed in the mounting cavity 33, and the glue container 4 may be bonded with the series-connected welding portion 32, so that the glue container 4 can be fixed with the electrode core assembly 3 by the injection molding glue.

As shown in FIG. 1 to FIG. 7, the assembly process of the battery module 1 is described according to the battery module 1 in the above embodiment.

According to the assembly method in the embodiment of the present invention, the battery module includes a housing, a glue container, and at least one electrode core assembly. The housing defines/includes a mounting space. The glue container defines/includes a glue storage groove with an open end. According to the assembly method for a battery module in the present invention, the battery module in the above embodiment may be assembled, and the assembly method includes the following steps.

S1: A glue container is connected to an electrode core assembly, and an open end of a glue storage groove is placed upward. In an embodiment, an assembler or a manipulator may place the glue container in the series-connected welding portion of any two adjacent electrode core assemblies, then place the electrode core assemblies and the glue container into a low-pressure injection mold together, and fix the electrode core assemblies and the glue container by injection molding glue through the low-pressure injection molding, so that the glue container can be fixed in the mounting cavity, and then the open end of the glue storage groove is kept upward before the electrode core assemblies and the glue container are sleeved in the housing.

S2: Glue is injected into the glue storage groove of the glue container.

S3: The glue container and the electrode core assemblies are placed into a mounting space as one piece, so that the open end of the glue storage groove is spaced apart from a top wall or a bottom wall of the housing, the housing is packaged/sealed, and a closed space is formed in the packaged housing.

S4: The housing is clamped to rotate a battery module by 180 degrees. The battery module is clamped by clamping two side walls of the housing in the width direction of the battery module, and the battery module is rotated by 180 degrees in the length direction of the battery module. Under the action of gravity, the glue in the glue storage groove flows out from the glue storage groove and is leveled on the bottom surface of the housing, so that the electrode core assemblies and the housing are bonded and fixed.

The battery according to the embodiment of the present invention includes the battery module 1 in the above embodiment. The glue container 4 is arranged in the battery module 1, glue is injected into the housing 2 through the glue container 4 during the assembly of the battery module 1, and the glue in the glue container 4 can evenly fill the bottom of the mounting space, so that the electrode core assembly 3 can be firmly bonded and fixed in the housing 2, thereby improving the operating stability of the battery module 1. Moreover, through the glue container 4, the position in the housing 2 that does not require glue can be kept clean and tidy, so that the heat dissipation capacity of the battery module 1 can be improved, and the service life of the battery can be further prolonged.

In the description of the present invention, it should be understood that orientations or position relationships indicated by the terms such as "length", "width", "thickness", "up", "down", "front", "back", "left", "right", "vertical", "horizontal", "top", "bottom", "inside", and "outside" are based on orientations or position relationships shown in the accompanying drawings, and are used only for ease and brevity of description of the present invention, rather than indicating or implying that the referred apparatus or element should have a particular orientation or needs to be constructed and operated in a particular orientation. Therefore, the terms should not be construed as s limitation on the present invention.

In the description of the present invention, "multiple" means two or more.

In the descriptions of this specification, the description of reference terms such as "one embodiment", "some embodiments", "an exemplary embodiment", "an example", "a specific example", or "some embodiments" means that specific features, structures, materials, or characteristics described in combination with the embodiment or examples are included in at least one embodiment or example of the present invention. In this specification, schematic descriptions of the foregoing terms do not necessarily mean the same embodiment or example. In addition, the described specific features, structures, materials, or characteristics may be combined in a proper manner in any one or more of the embodiments or examples.

Although the embodiments of the present invention have been shown and described, a person of ordinary skill in the art should understand that various changes, modifications, replacements, and variations may be made to the embodiments without departing from the principles of the present invention as defined in the appended claims, and the scope of the present invention is defined by the claims.

## Claims

1. A battery module (1), comprising:
a housing (2), comprising a mounting space;
at least one electrode core assembly (3), disposed in the mounting space; and
a glue container (4), connected with the at least one electrode core assembly (3) and located in the mounting space, wherein the glue container (4) comprises a groove (41) with an open end,
**characterized in that**
the open end of the groove (41) is spaced apart from a top surface or a bottom surface of the housing (2);
wherein, when the open end of the groove (41) is spaced apart from the top wall of the housing (2), a gap between the electrode core assembly (3) and the top wall of the housing (2) is evenly filled by glue flowed out from the groove (41) in the glue container (4); or
wherein, when the open end of the groove (41) is spaced apart from the bottom wall of the housing (2), a gap between the electrode core assembly (3) and the bottom wall of the housing (2) is evenly filled by glue flowed out from the groove (41) in the glue container (4).

2. The battery module according to claim 1, wherein
the at least one electrode core assembly (3) comprises a plurality of electrode core assemblies that are disposed in a length direction of the electrode core assemblies; and
the glue container (4) is disposed between at least two adjacent electrode core assemblies of the electrode core assemblies, and/or between the electrode core assemblies and the housing.

3. The battery module according to claim 1 or 2, wherein the glue container (4) extends in a height direction of the at least one electrode core assembly (3).

4. The battery module according to any of claims 1 to 3, wherein a glue flow channel (42) is disposed on an outer surface of the glue container (4); and the glue flow channel (42) is configured to store glue to connect the glue container (4) to the at least one electrode core assembly (3).

5. The battery module according to claim 4, wherein in a width direction of the battery module, the glue container (4) has a first surface and a second surface opposite to each other; and the glue flow channel is disposed on at least one of the first surface and the second surface.

6. The battery module according to any of claims 1 to 5, wherein
the glue container (4) has a glue storage capacity Q, and Q = L*A*B;
L is a length of the mounting space in a length direction of the battery module;
A is a width of the mounting space in a width direction of the battery module; and
B is a distance between the at least one electrode core assembly and the housing in a height direction of the battery module.

7. The battery module according to claim 6, further comprising N glue containers (4) including the glue container disposed in the housing, wherein a glue storage capacity of each of the N glue containers is Q1, and Q1 = (L*A*B)/N.

8. The battery module according to claim 6, wherein 0.5 mm ≤ B ≤ 5 mm.

9. The battery module according to claim 8, wherein 1 mm ≤ B ≤ 3 mm.

10. The battery module according to claim 6, wherein the at least one electrode core assembly (3) comprises at least one electrode core (31) and the width direction of the battery module is the same as a thickness direction of the electrode core,
particularly wherein the at least one electrode core (31) is disposed in sequence in the width direction of the battery module to form the electrode core assembly; and side surfaces of two adjacent electrode cores of the at least one electrode core abut against each other in a thickness direction of the at least one electrode core.

11. The battery module according to claim 2, wherein each of the electrode core assemblies (3) comprises a same number of electrode cores, and each of the electrode core assemblies has a same thickness.

12. The battery module according to any of claims 1 to 11, wherein the glue container (4) has a shape of a cuboid or a cylinder.

13. The battery module according to claim 2, further comprising a plurality of glue containers (4) including the glue container, wherein the glue containers are spaced apart in the length direction of the electrode core assemblies (3); and at least one of the glue containers is disposed between two adjacent electrode core assemblies of the electrode core assemblies, and/or between the electrode core assemblies and the housing.

14. A battery, comprising a battery module (1) according to any of claims 1 to 13.

15. An assembly method for a battery module, wherein
the battery module (1) comprises a housing (2), a glue container (4), and at least one electrode core assembly (3); the housing (2) comprises a mounting space, and the glue container (4) comprises a groove (41) with an open end; and
the assembly method comprises:
connecting (S1) the glue container to the electrode core assembly with the open end of the groove upward;
injecting (S2) glue into the groove of the glue container;
disposing (S3) the glue container and the electrode core assembly into the mounting space as one piece, and sealing the housing,
**characterized in that** the open end of the groove (41) is spaced apart from a top wall or a bottom wall of the housing;
the assembly method further comprising:
clamping (S4) the housing and rotating the battery module by 180 degrees such that, when the open end of the groove (41) is spaced apart from the top wall of the housing (2), the glue in the glue container (4) flows out from the groove (41) and evenly fills a gap between the electrode core assembly (3) and the top wall of the housing (2), or such that, when the open end of the groove (41) is spaced apart from the bottom wall of the housing (2), the glue in the glue container (4) flows out from the glue storage groove (41) and evenly fills a gap between the electrode core assembly (3) and the bottom wall of the housing (2).

## Patentansprüche

1. Batteriemodul (1), umfassend:
ein Gehäuse (2), das einen Einbauraum umfasst;
mindestens eine in dem Einbauraum angeordnete Elektrodenkernbaugruppe (3); und
einen Klebstoffbehälter (4), der mit der mindestens einen Elektrodenkernbaugruppe (3) verbunden ist und sich in dem Einbauraum befindet , wobei der Klebstoffbehälter (4) eine Nut (41) mit einem offenen Ende umfasst, **dadurch gekennzeichnet,**
**dass** das offene Ende der Nut (41) von einer Oberseite oder einer Unterseite des Gehäuses (2) beabstandet ist;
wobei, wenn das offene Ende der Nut (41) von der oberen Wand des Gehäuses (2) beabstandet ist, ein Spalt zwischen der Elektrodenkernbaugruppe (3) und der oberen Wand des Gehäuses (2) gleichmäßig durch Klebstoff gefüllt wird, der aus der Nut (41) in dem Klebstoffbehälter (4) geflossen ist; oder
wobei, wenn das offene Ende der Nut (41) von der Bodenwand des Gehäuses (2) beabstandet ist, ein Spalt zwischen der Elektrodenkernbaugruppe (3) und der Bodenwand des Gehäuses (2) gleichmäßig mit Klebstoff gefüllt wird, der aus der Nut (41) in dem Klebstoffbehälter (4) geflossen ist.

2. Batteriemodul gemäß Anspruch 1, wobei
die mindestens eine Elektrodenkernbaugruppe (3) eine Vielzahl von Elektrodenkernbaugruppen umfasst, die in einer Längsrichtung der Elektrodenkernbaugruppen angeordnet sind; und
der Klebstoffbehälter (4) zwischen mindestens zwei benachbarten Elektrodenkernbaugruppen der Elektrodenkernbaugruppen und/oder zwischen den Elektrodenkernbaugruppen und dem Gehäuse angeordnet ist.

3. Batteriemodul gemäß Anspruch 1 oder 2, wobei sich der Klebstoffbehälter (4) in der Höhenrichtung der mindestens einen Elektrodenkernbaugruppe (3) erstreckt.

4. Batteriemodul gemäß einem der Ansprüche 1 bis 3, wobei ein Klebstoffflusskanal (42) an einer Außenfläche des Klebstoffbehälters (4) angeordnet ist; und der Klebstoffflusskanal (42) dazu konfiguriert ist, Klebstoff aufzunehmen, um den Klebstoffbehälter (4) mit der mindestens einen Elektrodenkernbaugruppe (3) zu verbinden.

5. Batteriemodul gemäß Anspruch 4, wobei der Klebstoffbehälter (4) in einer Breitenrichtung des Batteriemoduls eine erste Oberfläche und eine dieser gegenüberliegende zweite Oberfläche aufweist; und der Klebstoffflusskanal auf mindestens einer der ersten und zweiten Oberflächen angeordnet ist.

6. Batteriemodul gemäß Anspruch 1 bis 5, wobei
der Klebstoffbehälter (4) ein Klebstoffspeichervolumen Q aufweist, wobei Q = L*A*B gilt;
L die Länge des Einbauraums in Längsrichtung des Batteriemoduls ist;
A die Breite des Einbauraums in Breitenrichtung des Batteriemoduls ist; und
B der Abstand zwischen der mindestens einen Elektrodenkernbaugruppe und dem Gehäuse in der Höhenrichtung des Batteriemoduls ist.

7. Batteriemodul gemäß Anspruch 6, das ferner N Klebstoffbehälter (4) umfasst, einschließlich des in dem Gehäuse angeordneten Klebstoffbehälters, wobei die Klebstoffspeicherkapazität jedes der N Klebstoffbehälter Q1 beträgt und Q1 = (L*A*B)/N ist.

8. Batteriemodul gemäß Anspruch 6, wobei 0,5 mm ≤ B ≤ 5 mm gilt.

9. Batteriemodul gemäß Anspruch 8, wobei 1 mm ≤ B ≤ 3 mm gilt.

10. Batteriemodul gemäß Anspruch 6, wobei die mindestens eine Elektrodenkernanordnung (3) mindestens einen Elektrodenkern (31) umfasst und die Breitenrichtung des Batteriemoduls mit der Dickenrichtung des Elektrodenkerns übereinstimmt,
insbesondere wobei der mindestens eine Elektrodenkern (31) nacheinander in der Breitenrichtung des Batteriemoduls angeordnet ist, um die Elektrodenkernanordnung zu bilden; und Seitenflächen von zwei benachbarten Elektrodenkernen des mindestens einen Elektrodenkerns in einer Dickenrichtung des mindestens einen Elektrodenkerns aneinander anliegen.

11. Batteriemodul gemäß Anspruch 2, wobei jede der Elektrodenkernanordnungen (3) die gleiche Anzahl von Elektrodenkernen umfasst und jede der Elektrodenkernanordnungen die gleiche Dicke aufweist.

12. Batteriemodul gemäß einem der Ansprüche 1 bis 11, wobei der Klebstoffbehälter (4) die Form eines Quaders oder eines Zylinders aufweist.

13. Batteriemodul gemäß Anspruch 2, das ferner eine Vielzahl von Klebstoffbehältern (4) umfasst, einschließlich des Klebstoffbehälters, wobei die Klebstoffbehälter in der Längsrichtung der Elektrodenkernbaugruppen (3) voneinander beabstandet sind; und wobei mindestens einer der Klebstoffbehälter zwischen zwei benachbarten Elektrodenkernbaugruppen der Elektrodenkernbaugruppen und/oder zwischen den Elektrodenkernbaugruppen und dem Gehäuse angeordnet ist.

14. Batterie, umfassend ein Batteriemodul (1) gemäß Anspruch 1 bis 13.

15. Verfahren zum Zusammenbau eines Batteriemoduls, wobei
das Batteriemodul (1) ein Gehäuse (2), einen Klebstoffbehälter (4) und mindestens eine Elektrodenkernbaugruppe (3) umfasst; das Gehäuse (2) einen Einbauraum umfasst, und der Klebstoffbehälter (4) eine Nut (41) mit einem offenen Ende umfasst; und
das Verfahren zum Zusammenbau umfasst:
Verbinden (S1) des Klebstoffbehälters mit der Elektrodenkernbaugruppe, wobei das offene Ende der Nut nach oben zeigt;
Einspritzen (S2) von Klebstoff in die Nut des Klebstoffbehälters;
Einbringen (S3) des Klebstoffbehälters und der Elektrodenkernbaugruppe als eine Einheit in den Einbauraum sowie das Verschließen des Gehäuses, **dadurch gekennzeichnet,**
**dass** das offene Ende der Nut (41) von einer oberen Wand oder einer unteren Wand des Gehäuses beabstandet ist; wobei das Montageverfahren ferner umfasst:
das Festklemmen (S4) des Gehäuses und das Drehen des Batteriemoduls um 180 Grad so, dass, wenn das offene Ende der Nut (41) von der oberen Wand des Gehäuses (2) beabstandet ist, der Klebstoff in dem Klebstoffbehälter (4) aus der Nut (41) austritt und einen Spalt zwischen der Elektrodenkernbaugruppe (3) und der Oberwand des Gehäuses (2) gleichmäßig ausfüllt, oder so, dass, wenn das offene Ende der Nut (41) von der Unterwand des Gehäuses (2) beabstandet ist, der Klebstoff in dem Klebstoffbehälter (4) aus der Nut (41) austritt und einen Spalt zwischen der Elektrodenkernbaugruppe (3) und der Bodenwand des Gehäuses (2) gleichmäßig ausfüllt.

## Revendications

1. Module de batterie (1), comprenant :
un boîtier (2), comprenant un espace de montage ;
au moins un ensemble de noyaux d'électrodes (3), disposé dans l'espace de montage ; et
un réservoir de colle (4), relié audit au moins un ensemble de noyau d'électrode (3) et situé au site de montage, dans lequel le réservoir de colle (4) comprend une rainure (41) présentant une extrémité ouverte, **caractérisé en ce que**
l'extrémité ouverte de la rainure (41) est espacée d'une surface supérieure ou d'une surface inférieure du boîtier (2) ;
dans lequel, lorsque l'extrémité ouverte de la rainure (41) est espacée de la paroi supérieure du boîtier (2), un espace entre l'ensemble de noyau d'électrode (3) et la paroi supérieure du boîtier (2) est uniformément comblé par de la colle s'écoulant de la rainure (41) dans le réservoir de colle (4) ; ou
dans lequel, lorsque l'extrémité ouverte de la rainure (41) est espacée de la paroi inférieure du boîtier (2), un espace entre l'ensemble de noyau d'électrode (3) et la paroi inférieure du boîtier (2) est rempli de manière uniforme par de la colle s'écoulant de la rainure (41) dans le réservoir de colle (4).

2. Module de batterie selon la revendication 1, dans lequel
l'au moins un ensemble de noyaux d'électrodes (3) comprend une pluralité d'ensembles de noyaux d'électrodes qui sont disposés dans une direction longitudinale des ensembles de noyaux d'électrodes ; et
le réservoir de colle (4) est disposé entre au moins deux ensembles de noyaux d'électrodes adjacents parmi lesdits ensembles de noyaux d'électrodes, et/ou entre lesdits ensembles de noyaux d'électrodes et le boîtier.

3. Module de batterie selon la revendication 1 ou 2, dans lequel le réservoir de colle (4) s'étend dans le sens de la hauteur de l'au moins un ensemble d'électrodes centrales (3).

4. Module de batterie selon l'une quelconque des revendications 1 à 3, dans lequel un canal d'écoulement de colle (42) est disposé sur une surface extérieure du réservoir de colle (4) ; et le canal d'écoulement de colle (42) est configuré pour stocker de la colle afin de relier le réservoir de colle (4) à l'au moins un ensemble de noyaux d'électrodes (3).

5. Module de batterie selon la revendication 4, dans lequel, dans le sens de la largeur du module de batterie, le réservoir de colle (4) présente une première surface et une deuxième surface opposées l'une à l'autre ; et le canal d'écoulement de colle est disposé sur au moins l'une de la première surface et de la deuxième surface.

6. Module de batterie selon l'une quelconque des revendications 1 à 5, dans lequel le réservoir de colle (4) présente une capacité de stockage de colle Q, et Q = L*A*B ;
L est la longueur de l'espace de montage dans le sens de la longueur du module de batterie ;
A est la largeur de l'espace de montage dans le sens de la largeur du module de batterie ; et
B est la distance entre l'au moins un ensemble de noyaux d'électrodes et le boîtier dans le sens de la hauteur du module de batterie.

7. Module de batterie selon la revendication 6, comprenant en outre N réservoirs de colle (4), y compris le réservoir de colle disposé dans le boîtier, dans lequel la capacité de stockage de colle de chacun des N réservoirs de colle est égale à Q1, et Q1 = (L × A × B)/N.

8. Module de batterie selon la revendication 6, dans lequel 0,5 mm ≤ B ≤ 5 mm.

9. Module de batterie selon la revendication 8, dans lequel 1 mm ≤ B ≤ 3 mm.

10. Module de batterie selon la revendication 6, dans lequel l'au moins un ensemble de noyaux d'électrodes (3) comprend au moins un noyau d'électrode (31) et la direction de la largeur du module de batterie est identique à la direction de l'épaisseur du noyau d'électrode,
en particulier dans lequel le au moins un noyau d'électrode (31) est disposé en série dans la direction de la largeur du module de batterie pour former l'ensemble de noyaux d'électrodes ; et les surfaces latérales de deux noyaux d'électrode adjacents du au moins un noyau d'électrode sont en butée l'une contre l'autre dans la direction de l'épaisseur du au moins un noyau d'électrode.

11. Module de batterie selon la revendication 2, dans lequel chacun des ensembles de noyaux d'électrode (3) comprend un même nombre de noyaux d'électrode, et chacun des ensembles de noyaux d'électrode présente une même épaisseur.

12. Module de batterie selon l'une quelconque des revendications 1 à 11, dans lequel le récipient de colle (4) a la forme d'un parallélépipède rectangle ou d'un cylindre.

13. Module de batterie selon la revendication 2, comprenant en outre une pluralité de réservoirs de colle (4) incluant le réservoir de colle, dans lequel les réservoirs de colle sont espacés les uns des autres dans la direction longitudinale des ensembles de noyaux d'électrodes (3) ; et au moins l'un des réservoirs de colle est disposé entre deux ensembles de noyaux d'électrodes adjacents parmi les ensembles de noyaux d'électrodes, et/ou entre les ensembles de noyaux d'électrodes et le boîtier.

14. Batterie, comprenant un module de batterie (1) selon l'une quelconque des revendications 1 à 13.

15. Procédé d'assemblage d'un module de batterie, dans lequel
le module de batterie (1) comprend un boîtier (2), un réservoir de colle (4) et au moins un ensemble d'électrodes (3) ; le boîtier (2) comporte un espace de montage, et le réservoir de colle (4) comporte une rainure (41) dont une extrémité est ouverte ; et
le procédé d'assemblage comprend :
raccorder (S1) le réservoir de colle à l'ensemble de noyau d'électrode, l'extrémité ouverte de la rainure étant orientée vers le haut ;
l'injection (S2) de colle d' dans la rainure du réservoir de colle ;
la mise en place (S3) du réservoir de colle et de l'ensemble de noyau d'électrode dans l'espace de montage en une seule pièce, et la fermeture hermétique du boîtier, **caractérisé en ce que** l'extrémité ouverte de la rainure (41) est espacée d'une paroi supérieure ou d'une paroi inférieure du boîtier ; le procédé d'assemblage comprenant en outre :
le serrage (S4) du boîtier et la rotation du module de batterie de 180 degrés de telle sorte que, lorsque l'extrémité ouverte de la rainure (41) est espacée de la paroi supérieure du boîtier (2), la colle contenue dans le réservoir de colle (4) s'écoule hors de la rainure (41) et comble uniformément un espace entre l'ensemble de noyau d'électrode (3) et la paroi supérieure du boîtier (2), ou de telle sorte que, lorsque l'extrémité ouverte de la rainure (41) est espacée de la paroi inférieure du boîtier (2), la colle contenue dans le réservoir de colle (4) s'écoule hors de la rainure de stockage de colle (41) et comble uniformément un espace entre l'ensemble de noyau d'électrode (3) et la paroi inférieure du boîtier (2).
